# EUROPEAN PATENT APPLICATION

(11) **EP 4 848 027 A1**
(43) Date of publication of application: **02.12.2026**
(21) Application number: 26181096.4
(22) Date of filing: 26.05.2026
(51) Int. Cl.: G05D 23/13, E03C 1/04, E03C 1/05

(54) **CONTROL BOX AND PARALLEL-CONNECTED SENSOR FAUCET WITH ELECTRONIC TEMPERATURE REGULATION**

(30) Priority: 26.05.2025 CN 202510685179
(71) Applicant: Zhangzhou Solex Smart Home Co., Ltd., Changtai County Zhangzhou City, Fujian Province 363900 (CN)
(72) Inventor: ZHANG, Liwen, Zhangzhou City, 363900 (CN); LAI, Hui, Zhangzhou City, 363900 (CN); CHEN, Wenxing, Zhangzhou City, 363900 (CN)
(74) Representative: Verscht, Thomas Kurt Albert

(57) **Abstract**

The present disclosure relates to the technical field of kitchen and bathroom equipment and discloses a control box and a parallel-connected sensor faucet with electronic temperature regulation, the parallel-connected sensor faucet with electronic temperature regulation comprises the control box, the control box comprises a box body, a mixing valve and a control member, the box body comprises a first inlet, a second inlet and a mixed water outlet; the mixing valve is disposed in the box body, the mixing valve comprises a water mixing passage, the first inlet, the second inlet and the mixed water outlet are all in communication with the water mixing passage, the mixing valve is in signal connection with a control system via a driving member, and the driving member is capable of regulating at least one of a temperature and a volume of fluid passing through the water mixing passage via the control system; and the control member is disposed on the box body, the control member comprises a plurality of fixed gear positions, the control member is in control connection with the driving member through the control system, and the control member controls the driving member via the plurality of fixed gear positions to drive the mixing valve so as to regulate the fluid passing through the water mixing passage, thus improving regulation convenience while reducing energy consumption.

## Description

### RELATED APPLICATIONS

This application claims priority to Chinese patent application number 202510685179.7, filed on May 26, 2025. Chinese patent application number 202510685179.7 is incorporated herein by reference.

### FIELD OF THE DISCLOSURE

The present disclosure relates to the technical field of kitchen and bathroom equipment, in particular relates to a control box and a parallel-connected sensor faucet with electronic temperature regulation.

### BACKGROUND OF THE DISCLOSURE

With the improvement of people's living standards, water supply systems in kitchens and bathrooms often comprises water mixing and temperature regulating mechanisms, allowing users to adjust to a suitable outlet water temperature manually according to personal usage habits. However, in the existing parallel-connected sensor faucets, the mechanical valve and the under-counter electromagnetic valve are connected in parallel, a temperature of waterway in which the sensor activates the electromagnetic valve to pass through the faucet cannot be adjusted, which limits application scenarios requiring temperature regulation for the waterway with the sensor.

One of the existing water mixing and temperature regulating mechanisms is manual temperature regulation, users adjust a water mixing valve manually to adjust cold water inflow rate of hot water inflow rate, and this method features poor temperature regulation accuracy and inconvenient operation; and the other method adopts two motors to separately control a cold water inlet valve and a hot water inlet valve for automatic temperature regulation, the method also needs to regulate positions of the two motors frequently, although temperature regulation of this temperature regulation method achieves high accuracy, and it requires frequent back-and-forth regulation of the two motors to reach a target temperature during temperature regulation, resulting in poor convenience, high cost, and also leading to higher energy consumption. In kitchen scenarios, daily vegetable washing and bowl cleaning do not require precise temperature regulation, only water at an appropriate regulation temperature is needed, so that there is an urgent demand for improved water mixing and temperature regulating devices adapted to an usage environment without excessive energy consumption.

### BRIEF SUMMARY OF THE DISCLOSURE

The objective of the present disclosure is provide a control box and a parallel-connected sensor faucet with electronic temperature regulation, thus improving regulation convenience while reducing energy consumption.

To achieve the aforementioned objective, the present disclosure adopts the following technical solutions:
A control box, which comprises:
A box body, the box body comprises a first inlet, a second inlet and a mixed water outlet;
A mixing valve, the mixing valve is disposed in the box body, the mixing valve comprises a water mixing passage, the first inlet, the second inlet and the mixed water outlet are all in communication with the water mixing passage, the mixing valve is in signal connection with a control system via a driving member, and the driving member is capable of regulating at least one of a temperature and a volume of fluid passing through the water mixing passage via the control system; and
A control member, the control member is disposed on the box body, the control member comprises a plurality of fixed gear positions, the control member is in control connection with the driving member through the control system, and the control member controls the driving member via the plurality of fixed gear positions to drive the mixing valve so as to regulate the fluid passing through the water mixing passage.

In some embodiments, the box body comprises an accommodating chamber, the mixing valve comprises a piston, the water mixing passage is disposed in the piston, the accommodating chamber is in communication with the first inlet, the second inlet and the mixed water outlet, an output end of the driving member is connected to the piston, and the driving member is configured to drive the piston to move within the accommodating chamber, so that the piston regulates inflow rate entering the water mixing passage from the first inlet and the second inlet.

In some embodiments, the water mixing passage penetrates through a first end of the piston; and the piston comprises two chamber inlet ports respectively correspondingly communicating with the first inlet and the second inlet, the output end of the driving member is connected to a second end of the piston, and the driving member drives the piston to move so as to control inlet sizes of the two chamber inlet ports.

In some embodiments, the control system comprises a control circuit board, the control circuit board pre-stores information of the control member corresponding to multiple different positions of the temperature of the fluid or multiple different positions of the volume of the fluid, and the control member is operated to enable the control circuit board to control the driving member to drive the mixing valve to regulate the fluid passing through the water mixing passage.

In some embodiments, the control box further comprises an electronic control valve, and the electronic control valve is disposed between the mixed water outlet and the mixing valve to allow water passage or block the water passage.

In some embodiments, the control box further comprises a mechanical control valve, and the mechanical control valve is disposed between the mixing valve and the electronic control valve to allow the water passage or block the water passage.

In some embodiments, the mechanical control valve is a ball valve, a control rod is connected to the ball valve, and the control rod penetrates out of the box body.

In some embodiments, the box body further comprises a first outlet, a second outlet and a mixed water inlet, the first outlet communicates with the first inlet, the second outlet communicates with the second inlet, the mixed water outlet communicates with the mixed water inlet, and the first outlet, the second outlet, the mixed water inlet and the mixed water outlet are disposed on a same side of the box body.

In some embodiments, the control box further comprises a display screen and a temperature sensor, the temperature sensor is capable of monitoring water temperature after mixing by the water mixing passage, and the temperature sensor is connected to the display screen through the control system.

In some embodiments, one or more indicator lamps are further disposed on the box body, and the one or more indicator lamps are connected to the control member through the control system.

A parallel-connected sensor faucet with electronic temperature regulation, which comprises:
A faucet body, the faucet body is operably disposed above a mounting surface, the faucet body comprises a discharge port, the discharge port is configured to deliver water;
An electronic control valve, the electronic control valve and a mixing valve are connected in series, when the electronic control valve is opened, the electronic control valve allows water passage and discharge through the discharge port, and when the electronic control valve is closed, the electronic control valve blocks the water passage leading to the discharge port;
A sensor switch configured to open or close the electronic control valve; and
A mechanical mixing valve disposed in the faucet body; and
The mechanical mixing valve and the electronic control valve are connected in parallel, and the control system controls the driving member to regulate at least one of a temperature and a volume of fluid passing through the mixing valve; and the electronic control valve and the mixing valve are disposed in the box body of the control box.

In some embodiments, the control box comprises a control member, the control member has a plurality of fixed gear positions, the control member is in control connection with the driving member through the control system, and the control member controls the driving member via the plurality of fixed gear positions to regulate the mixing valve.

In some embodiments, the control system comprises a control circuit board, the control circuit board pre-stores information of the control member corresponding to multiple different positions of a temperature of the fluid or multiple different positions of a volume of the fluid, and the control member is operated to enable the control circuit board to control the driving member to drive the mixing valve to regulate at least one of the temperature and the volume of the fluid.

The advantages of the present disclosure is as follows.

The control box is adopted to respectively connect the hot water inlet pipe and the cold water inlet pipe to the first inlet and the second inlet, the control member is disposed on the box body, from which a desired water temperature or desired water flow rate can be selected by operating the control member, after selecting the corresponding water temperature or water flow rate, the driving member drives the mixing valve to regulate to a corresponding position to directly output water of the preset temperature and flow rate, speeds of regulating the temperature or flow rate are fast, and the driving member regulates water inflow rate of hot water and cold water by regulating inflow rate entering the water mixing passage from the first inlet and the second inlet, thus flowing out from the mixed water outlet after mixing in the water mixing passage; and the control box adopts one of the fixed gear positions of the control member to fixedly control the driving member, avoiding frequent regulation of the driving member, prolonging the service life of the driving member and reducing energy consumption. This temperature regulation mechanism is particularly suitable for kitchen scenarios, only water at an appropriate temperature needs to be regulated for daily vegetable washing and bowl cleaning, and slight deviation has no impact on practical use without need for precise temperature. In addition, this temperature regulation method does not require multiple temperature sensors to detect the cold and hot inflow water temperatures and an outflow water temperature for feedback regulation, reducing the number of required components and simplifying the design of complex temperature feedback regulation programs.

Furthermore, the electronic control valve, the mixing valve and the driving member of the parallel-connected sensor faucet with the electronic temperature regulation are integrally installed in the control box, featuring high component integration, concise appearance, and small volume, and the mechanical potential waterway and the electronic temperature regulation waterway of the faucet are connected in parallel, supporting both manual temperature adjustment and sensor-based electronic temperature regulation with diversified, fast, and convenient temperature regulation.

### BRIEF DESCRIPTION OF THE DRAWINGS

FIG. 1 illustrates a schematic view of a control box showing an electronic control valve;
FIG. 2 illustrates a cross-sectional view of the control box;
FIG. 3 illustrates an enlarged view of a portion A in FIG. 2;
FIG. 4 illustrates a schematic view of the control box showing a control member and a mechanical control valve;
FIG. 5 illustrates a schematic view of a connection of the control box and a fixed faucet; and
FIG. 6 illustrates a schematic view of a connection of the control box and a pulling faucet.

In the drawings:
Control box 100;
Box body 1; accommodating chamber 2; first inlet 3; second inlet 4; mixed water outlet 5; first outlet 6; second outlet 7; mixed water inlet 8; driving member 9; mixing valve 10; piston 101; water mixing passage 102; chamber inlet port 103; control member 11; electronic control valve 12; mechanical control valve 13; connection port 14; and control circuit board 15;
Faucet 200; faucet body 201; discharge port 202; mechanical mixing valve 203; sensor switch 204; first pipe 205; second pipe 206; third pipe 207; and adaptor pipe 208.

### DETAILED DESCRIPTION OF THE EMBODIMENTS

The present disclosure will be further described below in detail in combination with the accompanying drawings and embodiments. It should be understood that the specific embodiments described herein are merely intended to explain the present disclosure rather than limiting the present disclosure. In addition, it should be further noted that the accompanying drawings merely illustrate a part relevant to the present disclosure for description convenience, rather than the whole structure.

In the description of the present disclosure, unless otherwise explicitly specified and limited, the terms "connected each other", "connected", and "fixed" shall be interpreted broadly, for example, they may be fixedly connected, detachably connected, or integrated; they may be mechanically connected or electrically connected; and they may be directly connected, indirectly connected through an intermediate medium, communication between inner portions of two elements or interaction between the two elements. The specific meanings of the terms in the present disclosure can be understood according to specific circumstances for those of skill in the art.

In the present disclosure, unless otherwise explicitly specified and limited, a first feature being "above" or "below" a second feature may include direct contact between the first and second features, or include indirect contact between the first and second features, wherein contact is conducted through additional features therebetween. Moreover, the first feature being "on", "above" and "over" the second feature includes the first feature being directly disposed above and obliquely above the second feature, or merely indicates that a horizontal height of the first feature is higher than that of the second feature. The first feature being "beneath", "below" and "under" the second feature includes the first feature being directly below and obliquely below the second feature, or merely indicates that the horizontal height of the first feature is lower than that of the second feature.

In the description of this embodiment, the terms of orientation or position relationship, such as "upper", "lower", "left", and "right" are based on the orientation or position relationship shown in the accompanying drawings, which are only for description convenience and simplified operation, rather than indicating or implying that the referred device or element should have a specific orientation, be constructed and operated in a specific orientation, and thus shall not be construed as limiting the present disclosure. In addition, the terms "first" and "second" are only used for description distinction and have no special meaning.

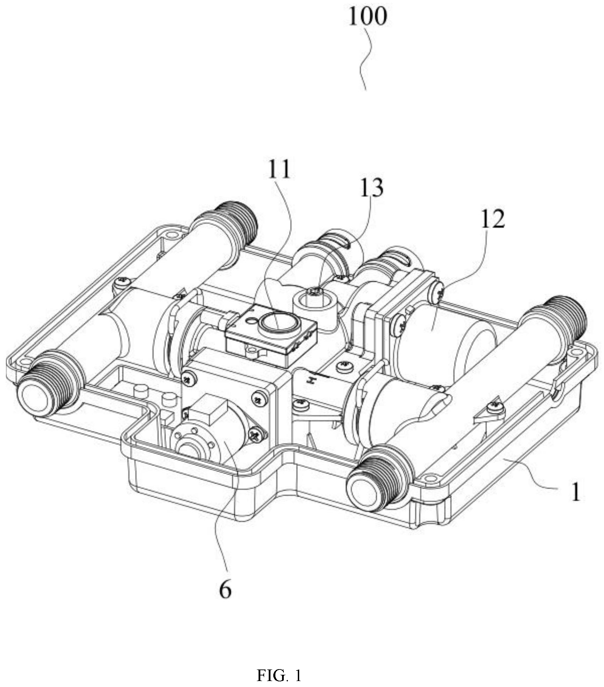

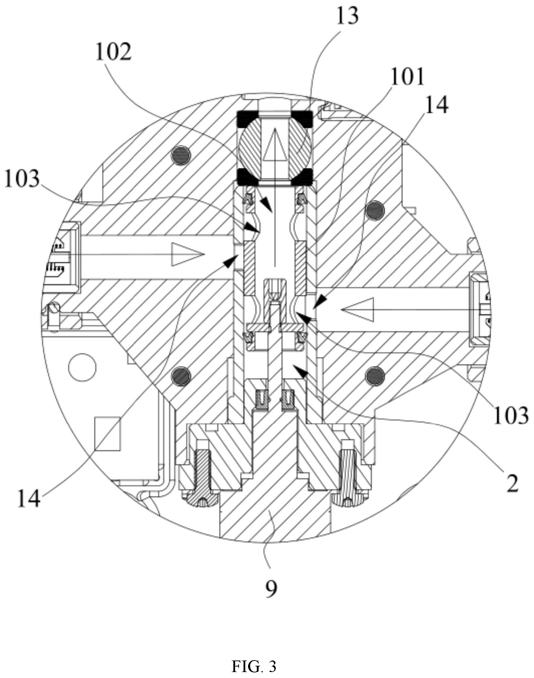

As shown in FIGS. 1-6, the present disclosure provides a control box, which includes a box body 1, a mixing valve 10 and a control member 11, and the box body 1 comprises a first inlet 3, a second inlet 4 and a mixed water outlet 5; the mixing valve 10 is disposed in the box body 1, the mixing valve 10 comprises a water mixing passage 102, the first inlet 3, the second inlet 4 and the mixed water outlet 5 are all in communication with the water mixing passage 102, the mixing valve 10 is in signal connection with a control system through a driving member 9, and the driving member 9 can regulate at least one of a temperature and a volume of fluid passing through the water mixing passage 102 via the control system; and the control member 11 is disposed on the box body 1, the control member 11 comprises a plurality of fixed gear positions, the control member 11 is in control connection with the driving member 9 through the control system, and the control member 11 controls the driving member 9 via the plurality of fixed gear positions to drive the mixing valve 10 to regulate the fluid passing through the water mixing passage 102.

The control box 100 is adopted to respectively connect a hot water inlet pipe and a cold water inlet pipe to the first inlet 3 and the second inlet 4, the control member 11 is disposed on the box body 1, from which a desired water temperature or desired water flow rate can be selected by operating the control member 11, after selecting the corresponding water temperature or water flow rate, the driving member 9 drives the mixing valve 10 to regulate to a corresponding position to directly output water of the preset temperature and flow rate, speeds of regulating the temperature or flow rate are fast, and the driving member 9 regulates water inflow rate of hot water and cold water by regulating inflow rate entering the water mixing passage 102 from the first inlet 3 and the second inlet 4, thus flowing out from the mixed water outlet 5 after mixing in the water mixing passage 102; and the control box adopts one of the fixed gear positions of the control member 11 to fixedly control the driving member 9, avoiding frequent regulation of the driving member 9, prolonging the service life of the driving member 9 and reducing energy consumption. This temperature regulation mechanism is particularly suitable for kitchen scenarios, only water at an appropriate temperature needs to be regulated for daily vegetable washing and bowl cleaning, and slight deviation has no impact on practical use without need for precise temperature. In addition, this temperature regulation method does not require multiple temperature sensors to detect cold and hot inflow water temperatures and an outflow water temperature for feedback regulation, reducing the number of required components and simplifying the design of complex temperature feedback regulation programs.

In some embodiments, the box body 1 comprises an accommodating chamber 2, the mixing valve 10 comprises a piston 101, the water mixing passage 102 is disposed in the piston 101, the accommodating chamber 2 is in communication with the first inlet 3, the second inlet 4 and the mixed water outlet 5, an output end of the driving member 9 is connected to the piston 101, and the driving member 9 can drive the piston 101 to move within the accommodating chamber 2, so that the piston 101 regulates the inflow rate entering the water mixing passage 102 from the first inlet 3 and the second inlet 4. Specifically, the control box 100 comprises two water inlet passages, the two water inlet passages are in communication with the accommodating chamber 2, openings on one end of the two water inlet passages are the first inlet 3 and the second inlet 4 for connecting the external cold water inlet pipe and hot water inlet pipes respectively, the two water inlet passages are connected to the accommodating chamber 2 and form connection ports 14 on the accommodating chamber 2, so that the first inlet 3 and the second inlet 4 are in communication with the accommodating chamber 2, the connection ports 14 of the two water inlet passages on the accommodating chamber 2 are disposed at intervals along an axial direction of the piston 101, and the two connection ports 14 are disposed on two opposite sides of the accommodating chamber 2.

The water mixing passage 102 of the piston 101 penetrates through a first end of the piston 101 to communicate the water mixing passage 102 with the mixed water outlet 5, a second end of the piston 101 is connected to the output end of the driving member 9, the piston 101 further comprises two chamber inlet ports 103, the two chamber inlet ports 103 are disposed at intervals along the axial direction of the piston 101 and respectively corresponding to the two connection ports 14, so that water entering from the first inlet 3 and the second inlet 4 can flow into the water mixing passage 102 for mixing through the connection ports 14 and the chamber inlet ports 103, and then flow out from the mixed water outlet 5.

When the driving member 9 drives the piston 101 to move along the axial direction thereof, the chamber inlet ports 103 on the piston 101 can be aligned or misaligned with the connection ports 14 so as to change inlet sizes of the chamber inlet ports 103 relative to the connection ports 14, thereby regulating the water inflow rate and further regulating the temperature after mixing. For example, the driving member 9 can adopt a direct current motor but is not limited thereto. It can be understood that when inflow water temperatures of the cold water inlet pipe and the hot water inlet pipe are equal, a movement of the piston 101 can merely change a volume of mixed water without changing the temperature. In other embodiments, the mixing valve 10 can further include a sleeve, the sleeve is fixed in the accommodating chamber 2, the sleeve comprises sleeve ports corresponding to the connection ports 14, and the piston 101 moves in the sleeve to facilitate the movement of the piston 101; and two ends of the sleeve comprise openings in which an opening on one end allows the fluid in the water mixing passage 102 to flow out, and an opening on the other end allows the output end of the driving member 9 to extend into and connect to the piston 101.

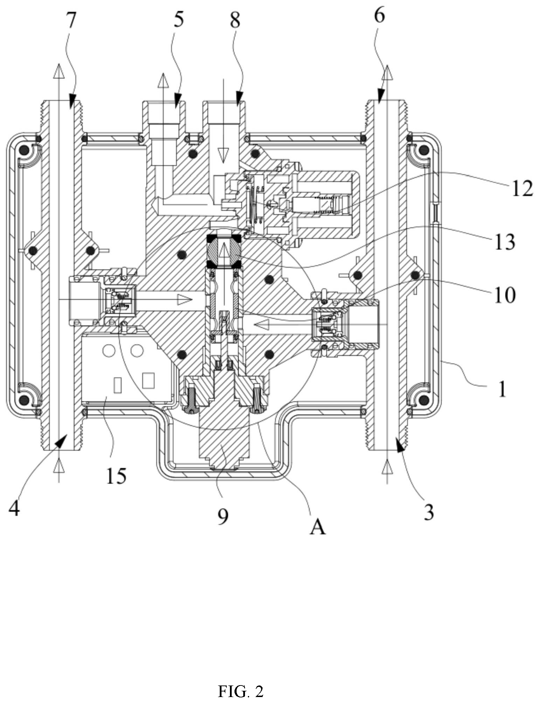

As shown in FIGS. 1 and 2, in some embodiments, the control box 100 further comprises an electronic control valve 12, the electronic control valve 12 is disposed between the mixed water outlet 5 and the piston 101 to allow water passage or block water passage by the electronic control valve 12, thereby controlling water discharge timing, and the electronic control valve 12 can further be matched with an external sensor switch 204. For example, the electronic control valve 12 can adopt an electromagnetic valve but is not limited thereto. Further, the control box 100 further comprises a mechanical control valve 13, the mechanical control valve 13 is disposed between the piston 101 and the electronic control valve 12, when the electronic control valve 12 fails due to factors such as faults or power outages, the mechanical control valve 13 can allow water passage or block water passage to avoid unnecessary water leakage. For example, the mechanical control valve 13 is a ball valve disposed in the water mixing passage 102, a connecting rod (a control rod) is disposed on the ball valve, the connecting rod penetrates out of the control box 100 to drive the ball valve to rotate by the connecting rod, thus controlling on-off of the water mixing passage 102. In this embodiment, an end of the connecting rod is aligned with an end of the control box 100 to reduce unnecessary interference, to facilitate rotation of the connecting rod, a rotary groove matched with a screwdriver and the like is disposed on the end of the connecting rod away from the ball valve. As the mechanical control valve 13 only needs to be operated in such conditions as the faults, the power outages or the like of the electronic control valve 12, required operation frequency is rare, only the rotary groove matched with the screwdriver and the like needs to be disposed without the need for a special operating handle, and the ball valve can be rotated by matching the screwdriver with the rotary groove to control the on-off of the water mixing passage 102 when the conditions occur.

In some embodiments, the control box 100 further comprises a display screen and a temperature sensor (not shown in drawings), and in this embodiment, a detection end of the temperature sensor is disposed between the electronic control valve 12 and the mixed water outlet 5 to monitor a temperature of the mixed water after mixing by the water mixing passage 102 by the temperature sensor; and the display screen is disposed on the control box 100, and the temperature sensor is connected to the display screen through the control system to transmit the temperature detected by the temperature sensor to display on the display screen for user reference, thus enabling the user to clearly confirm whether it has been regulated to the required one of the gear positions. As the required temperature or water flow rate are regulated in advance in practical use, the control system pre-stores multiple fixed positions of the driving member 9 corresponding to the water temperature or water flow rate, the control member 11 is operated to enable the mixing valve 10 to directly regulate to the corresponding water temperature, an actual displayed water temperature may deviate from a preset fixed temperature due to changes in the cold and hot inflow water temperatures, but the deviation is very slight, and slightly deviation from the displayed temperature has no impact in practical use on kitchen usage scenarios that do not require precise temperature.

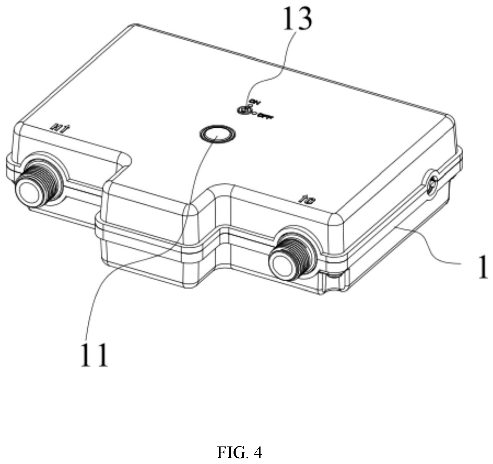

As shown in FIG. 4, in some embodiments, the control member 11 can be a knob or a push member, the control system at least comprises a control circuit board 15, the control circuit board 15 is connected to the driving member 9, the control circuit board 15 is integrally installed in the control box 100, the control circuit board 15 pre-stores information of the control member 11 corresponding to multiple different positions of the temperature of the fluid or multiple different positions of the volume of the fluid, and the control member 11 is operated to enable the control circuit board 15 to control the driving member 9 to drive the mixing valve 10 to regulate the fluid passing through the water mixing passage 102. To further enhance visual control, one or more indicator lamps are further disposed on the control box 100, displaying different gear positions through different colors or different quantities of the one or more indicator lamps, and in this embodiment, the one or more indicator lamps are disposed around the control member 11. In addition, it should be noted that the number of the gear positions of the control member 11 is not specifically limited, and may exemplarily include 30 °C, 35 °C, 40 °C, 45 °C or the like. The control member 11 adopts the knob in this embodiment, and may alternatively adopt a button or a push button.

As shown in FIG. 2, to expand the application scope so as to connect different types of faucet 200 such as fixed forms and pulling forms, in some embodiments, the control box 100 further comprises a first outlet 6, a second outlet 7 and a mixed water inlet 8, the first outlet 6 is in communication with the first inlet 3, the second outlet 7 is in communication with the second inlet 4, the mixed water outlet 5 is in communication with the mixed water inlet 8, and the mixed water inlet 8 is disposed between the mixed water outlet 5 and the electronic control valve 12, enabling the first outlet 6, the second outlet 7 and the mixed water inlet 8 to be in communication with pipelines on the faucet 200.

In this embodiment, the two water inlet passages are three-way pipelines, first openings of the three-way pipelines serves as connection ports 14, second openings of the three-way pipelines serve as the first inlet 3 or the second inlet 4 connected to the external cold and hot water inlet pipes, and third openings of the three-way pipelines serve as the first outlet 6 or the second outlet 7, thus entering the water mixing passage 102 for mixing through the first inlet 3 and the second inlet 4 from the cold water inlet pipe and the hot water inlet pipe in one aspect or directly entering the faucet 200 through the first outlet 6 and the second outlet 7 at the same time; and the mixed water inlet 8 is also directly connected to a pipeline on the faucet 200 for connecting to the pulling faucet.

In some embodiments, the first outlet 6, the second outlet 7, the mixed water inlet 8 and the mixed water outlet 5 are disposed on a same side of the control box 100 as to facilitate connection of the various pipelines.

The present disclosure further provides a parallel-connected sensor faucet with electronic temperature regulation, which comprises the control box 100 and the faucet 200, the faucet 200 comprises a faucet body 201, the faucet body 201 comprises a discharge port 202, and the discharge port can deliver the water. The faucet 200 can be a fixed faucet or the pulling faucet.

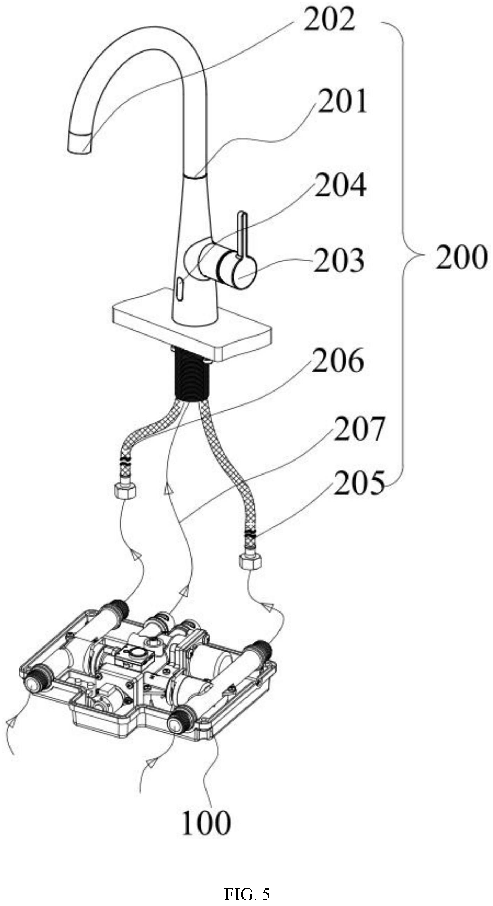

The structure of the faucet 200 varies according to the different types of the faucet 200, for example, and the faucet 200 can adopt structures as follows but is not limited thereto:
As shown in FIG. 5, in the embodiments in which the faucet 200 is the fixed faucet, a water outlet passage is further disposed in the faucet body 201, the water outlet passage comprises two inlets and an outlet, the outlet of the water outlet passage serves as the discharge port 202, a mechanical mixing valve 203 (a water mixing valve) is disposed on the faucet body 201, the mechanical mixing valve 203 is disposed in the faucet body 201 and disposed at one of the inlets of the water outlet passage, a valve outlet of the mechanical mixing valve 203 is in communication with the one of the inlets, the mechanical mixing valve 203 is a conventional component in the existing techniques, and its specific structure will not be described redundantly. The faucet 200 further comprises a first pipe 205, a second pipe 206 and a third pipe 207, the first pipe 205 communicates the first outlet 6 with a first valve inlet of the mechanical mixing valve 203, and the second pipe 206 communicates the second outlet 7 with a second valve inlet of the mechanical mixing valve 203, so that the water from the cold water inlet pipe and the hot water inlet pipe can directly enter into the mechanical mixing valve 203 for mixing and then discharge from the discharge port 202 through the water outlet passage. The third pipe 207 communicates the mixed water outlet 5 with the other of the inlets of the water outlet passage, and the mixed water inlet 8 can be blocked by a plug, so that mixed water in the water mixing passage 102 can discharge from the discharge port 202 through the water outlet passage.

In addition, the parallel-connected sensor faucet 200 with the electronic temperature regulation further comprises a sensor switch 204, the sensor switch 204 is disposed on the faucet body 201, and it should be understood that the sensor switch 204 can be independently disposed away from the faucet body 201; the sensor switch 204 is connected to the electronic control valve 12 through the control system to control on-off of the electronic control valve 12 by the sensor switch 204, that is, when the faucet 200 is adopted, the sensor switch 204 and the mechanical mixing valve can control water discharge from the discharge port 202 in parallel without mutual interference therebetween, featuring more convenient operation while still maintaining normal use of the faucet 200 even if any one fails. It can be understood that only one of the mechanical mixing valve and the sensor switch 204 is arranged in other alternative embodiments.

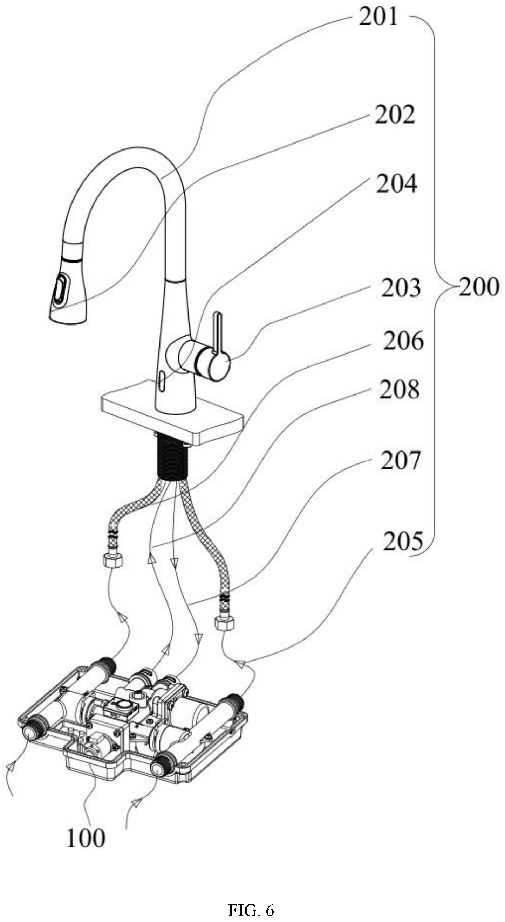

As shown in FIG. 6, in embodiments in which the faucet 200 is the pulling faucet, the faucet 200 also comprises the faucet body 201, a pulling pipe is further disposed on the faucet body 201, an outlet of the pulling pipe serves as the discharge port 202, in this embodiment, the mechanical mixing valve 203, a first pipe 205, a second pipe 206 and a third pipe 207 are disposed on the faucet body 201, the first pipe 205 communicates the first outlet 6 with a first valve inlet of the mechanical mixing valve 203, the second pipe 206 communicates the second outlet 7 with a second valve inlet of the mechanical mixing valve 203, the third pipe 207 communicates a valve outlet of the mechanical mixing valve 203 with the mixed water inlet 8, an inlet of the pulling pipe is in communication with the mixed water outlet 5 (the inlet of the pulling pipe can also be in communication with the mixed water outlet 5 through an adapter pipe 208). Thus, the water from the cold water inlet pipe and the hot water inlet pipe can directly enters into the mechanical mixing valve 203 for mixing, then flow into the water mixing passage 102 through the third pipe 207 and discharge from the discharge port 202 through the mixed water outlet 5; alternatively, the water from the cold water inlet pipe and the hot water inlet pipe can enters into the water mixing passage 102 through the first inlet 3 and the second inlet 4, then discharge from the discharge port 202 through the electronic control valve 12 and the mixed water outlet 5. This connection method first guides the mixed water from different paths into the water mixing passage 102 and then discharges through the pulling pipe, which is suitable for connecting to the pulling faucet.

In this embodiment, the faucet body 201 can also comprises a sensor switch 204, the sensor switch 204 can be disposed on the faucet body 201 or independently disposed from the faucet body 201, the sensor switch 204 is connected to the electronic control valve 12 through the control system to control on-off of the electronic control valve 12 by the sensor switch 204, and the electronic control valve 12 is connected to the mixing valve 10 in series to control the water discharging from the discharge port 202; and the electronic control valve 12 and the mechanical mixing valve 203 can control the water discharge from the discharge port 202 in parallel without mutual interference. The sensor switch 204 can adopt an infrared sensor, a Time of Flight (TOF) sensor, a capacitive touch sensor or the like. An external battery box can be disposed outside the box body 1 of the control box 100 (not shown in drawings), a replaceable battery or a rechargeable battery is installed in the battery box, the battery box supplies power to the control system, the sensor switch 204, the electronic control valve 12 and the driving member 9, and the sensor switch 204 on the faucet 200 is connected to the battery box through a power line. Alternatively, the control box 100 can be directly connected to commercial power. This embodiment adopts the battery box to supply power, the preceding method can reduce the energy consumption of the battery in the battery box and prolong service life, thus avoiding frequent replacement of the battery.

Regardless of the types of the faucet 200 adopted, the mixing valve 10 can be driven and controlled through the plurality of fixed gear positions of the control member 11 in the control box 100 to regulate the water from the discharge port.

The electronic control valve 12, the mixing valve 10 and driving member 9 of the parallel-connected sensor faucet with the electronic temperature regulation are integrally installed in the control box 100, featuring high component integration, concise appearance, and small volume, a waterway of mechanical potential and a waterway the electronic temperature regulation of the faucet 200 are arranged in parallel, supporting both manual temperature adjustment and sensor-based electronic temperature regulation with diversified, fast and convenient temperature regulation.

The present invention may be summarized as follows: The present disclosure relates to the technical field of kitchen and bathroom equipment and discloses a control box and a parallel-connected sensor faucet with electronic temperature regulation, the parallel-connected sensor faucet with electronic temperature regulation comprises the control box, the control box comprises a box body, a mixing valve and a control member, the box body comprises a first inlet, a second inlet and a mixed water outlet; the mixing valve is disposed in the box body, the mixing valve comprises a water mixing passage, the first inlet, the second inlet and the mixed water outlet are all in communication with the water mixing passage, the mixing valve is in signal connection with a control system via a driving member, and the driving member is capable of regulating at least one of a temperature and a volume of fluid passing through the water mixing passage via the control system; and the control member is disposed on the box body, the control member comprises a plurality of fixed gear positions, the control member is in control connection with the driving member through the control system, and the control member controls the driving member via the plurality of fixed gear positions to drive the mixing valve so as to regulate the fluid passing through the water mixing passage, thus improving regulation convenience while reducing energy consumption.

It is obvious that the aforementioned embodiments of the present disclosure are merely examples for clearly illustrating the present disclosure rather than limiting the implementations of the present disclosure. Various obvious changes, re-adjustments and substitutions made by those of skill in the art will not depart from the protection scope of the present disclosure. There is no need and cannot exhaust all implementations herein. Any modification, equivalent replacement, improvement and the like shall fall within the protection scope of the claims of the present disclosure provided that they are made within the spirit and principle of the present disclosure.

## Claims

1. A control box, comprising:
a box body (1), the box body (1) comprises a first inlet (3), a second inlet (4) and a mixed water outlet (5);
a mixing valve (10), the mixing valve (10) is disposed in the box body (1), the mixing valve (10) comprises a water mixing passage (102), the first inlet (3), the second inlet (4) and the mixed water outlet (5) are all in communication with the water mixing passage (102), the mixing valve (10) is in signal connection with a control system via a driving member (9), and the driving member (9) is capable of regulating at least one of a temperature and a volume of fluid passing through the water mixing passage (102) via the control system; and
a control member (11), the control member (11) is disposed on the box body (1), the control member (11) comprises a plurality of fixed gear positions, the control member (11) is in control connection with the driving member (9) through the control system, and the control member (11) controls the driving member (9) via the plurality of fixed gear positions to drive the mixing valve (10) so as to regulate the fluid passing through the water mixing passage (102).

2. The control box according to claim 1, **characterized in that**: the box body (1) comprises an accommodating chamber (2), the mixing valve (10) comprises a piston (101), the water mixing passage (102) is disposed in the piston (101), the accommodating chamber (2) is in communication with the first inlet (3), the second inlet (4) and the mixed water outlet (5), an output end of the driving member (9) is connected to the piston (101), and the driving member (9) is configured to drive the piston (101) to move within the accommodating chamber (2), so that the piston (101) regulates inflow rate entering the water mixing passage (102) from the first inlet (3) and the second inlet (4).

3. The control box according to claim 2, **characterized in that**: the water mixing passage (102) penetrates through a first end of the piston (101); and the piston (101) comprises two chamber inlet ports (103) respectively correspondingly communicating with the first inlet (3) and the second inlet (4), the output end of the driving member (9) is connected to a second end of the piston (101), and the driving member (9) drives the piston (101) to move so as to control inlet sizes of the two chamber inlet ports (103).

4. The control box according to any one or more of claims 1 to 3, **characterized in that**: the control system comprises a control circuit board (15), the control circuit board (15) pre-stores information of the control member (11) corresponding to multiple different positions of the temperature of the fluid or multiple different positions of the volume of the fluid, and the control member (11) is operated to enable the control circuit board (15) to control the driving member (9) to drive the mixing valve (10) to regulate the fluid passing through the water mixing passage (102).

5. The control box according to any one or more of claims 1 to 4, **characterized in that**: the control box (100) further comprises an electronic control valve (12), and the electronic control valve (12) is disposed between the mixed water outlet (5) and the mixing valve (10) to allow water passage or block the water passage.

6. The control box according to claim 5, **characterized in that**: the control box (100) further comprises a mechanical control valve (13), and the mechanical control valve (13) is disposed between the mixing valve (10) and the electronic control valve (12) to allow the water passage or block the water passage.

7. The control box according to claim 6, **characterized in that**: the mechanical control valve (13) is a ball valve, a control rod is connected to the ball valve, and the control rod penetrates out of the box body (1).

8. The control box according to any one or more of claims 1 to 7, **characterized in that**: the box body (1) further comprises a first outlet (6), a second outlet (7) and a mixed water inlet (8), the first outlet (6) communicates with the first inlet (3), the second outlet (7) communicates with the second inlet (4), the mixed water outlet (5) communicates with the mixed water inlet (8), and the first outlet (6), the second outlet (7), the mixed water inlet (8) and the mixed water outlet (5) are disposed on a same side of the box body (1).

9. The control box according to any one or more of claims 1 to 8, **characterized in that**: the control box (100) further comprises a display screen and a temperature sensor, the temperature sensor is capable of monitoring water temperature after mixing by the water mixing passage (102), and the temperature sensor is connected to the display screen through the control system.

10. The control box according to any one or more of claims 1 to 9, **characterized in that**: one or more indicator lamps are further disposed on the box body (1), and the one or more indicator lamps are connected to the control member (11) through the control system.

11. A parallel-connected sensor faucet with electronic temperature regulation, comprising:
a faucet body (201), the faucet body (201) is operably disposed above a mounting surface, the faucet body (201) comprises a discharge port (202), the discharge port (202) is configured to deliver water;
an electronic control valve (12), the electronic control valve (12) and a mixing valve (10) are connected in series, when the electronic control valve (12) is opened, the electronic control valve (12) allows water passage and discharge through the discharge port (202), and when the electronic control valve (12) is closed, the electronic control valve (12) blocks the water passage leading to the discharge port (202);
a sensor switch (204) configured to open or close the electronic control valve (12); and
a mechanical mixing valve (203) disposed in the faucet body (201); and
the mechanical mixing valve (203) and the electronic control valve (12) are connected in parallel, and the control system controls the driving member (9) to regulate at least one of a temperature and a volume of fluid passing through the mixing valve (10); and the electronic control valve (12) and the mixing valve (10) are disposed in the box body (1) of the control box (100).

12. The parallel-connected sensor faucet with the electronic temperature regulation according to claim 11, **characterized in that**: the control box (100) comprises a control member (11), the control member (11) has a plurality of fixed gear positions, the control member (11) is in control connection with the driving member (9) through the control system, and the control member (11) controls the driving member (9) via the plurality of fixed gear positions to regulate the mixing valve (10).

13. The parallel-connected sensor faucet with the electronic temperature regulation according to claim 12, wherein: the control system comprises a control circuit board (15), the control circuit board (15) pre-stores information of the control member (11) corresponding to multiple different positions of a temperature of the fluid or multiple different positions of a volume of the fluid, and the control member (11) is operated to enable the control circuit board (15) to control the driving member (9) to drive the mixing valve (10) to regulate at least one of the temperature and the volume of the fluid.
